# EUROPÄISCHE PATENTANMELDUNG

(11) **EP 0 582 100 A1**
(43) Veröffentlichungstag der Anmeldung: **09.02.1994**
(21) Anmeldenummer: 93110986.2
(22) Anmeldetag: 09.07.1993
(51) Int. Cl.: B60T 7/22, B60R 19/02

(54) **Kollisionsschutzeinrichtung für fahrerlose Flurförderzeuge**

(30) Priorität: 06.08.1992 DE 4225963
(71) Anmelder: INDUMAT GmbH & Co. KG Transport- und Lagersysteme, D-72770 Reutlingen (DE)
(72) Erfinder: Obschonka, Frank, Dipl.-Wirt.Ing. (FH), D-72654 Neckartenzlingen (DE)

(57) **Zusammenfassung**

Ein fahrerloses Flurförderzeug (3) ist front- und/oder endseitig mit einer Kollisionsschutzeinrichtung (12) versehen. Diese ist mit einem gelenkig angeordneten Schaltbügel (7) zur Verzögerung und/oder Notabschaltung des Flurförderzeuges (3) ausgestattet, der am Flurförderzeug (3) mittels zumindest eines Scherenhebelgetriebes (1, 2) befestigt ist, dessen dem Flurförderzeug (3) zugewandten Scherenenden in Fahrzeugquerrichtung federbelastet vorgespannt sowie verschiebbar geführt sind. Der Schaltbügel (7) ist mittels zumindest eines fahrzeugstationär spannbaren und/oder aufwickelbaren flexiblen Schaltbandes (8) gegen die Federvorspannung von einer äußeren Betriebsstellung (22) in eine an oder zumindest teilweise unterhalb der äußeren Fahrzeugkontur liegende Außerbetriebsstellung (19) verbringbar. Hierzu ist das Schaltband (8) in zumindest einer förderzeugstationären Bandspann- und/oder - wickeleinrichtung (10) geführt, die mittels zumindest eines koppel- und entkoppelbaren Antriebes (16) in einer Drehrichtung antreibbar ist. Auf dem Flurförderzeug (3) ist zumindest ein dem Schaltband (8) gegenüberstehender signalauslösender Bandverschiebungssensor (17) vorgesehen, der mit Oberflächen- bzw. Signalmarkierungen (18) des Schaltbandes (8) in Wirkverbindung steht.

## Beschreibung

Die Erfindung betrifft eine Kollisionsschutzeinrichtung für fahrerlose Flurförderzeuge mit front- und/oder endseitig des Flurförderzeuges gelenkig angeordneten Schaltbügeln zur Verzögerung und/oder Notabschaltung des Flurförderzeuges, die von einer äußeren Betriebsstellung in eine an oder zumindest teilweise unterhalb der äußeren Fahrzeugkontur liegende Außerbetriebsstellung verbringbar sind.

Kollisionsschutzeinrichtungen der zuvor genannten Bauart erfordern in der Regel einen erheblichen steuerungstechnischen Aufwand in Form mechanischer, elektromechanischer, hydraulischer oder pneumatischer Stelleinrichtungen, der in einer Vielzahl von Anwendungsfällen, beispielsweise bei einfachen Fahrkursen usw., sowohl im Verhältnis zu den einzelnen Fahrzeugkosten als auch zu den gesamten Systemkosten nicht gerechtfertigt ist.

Der Erfindung liegt deshalb die Aufgabe zugrunde, unter Vermeidung der zuvor genannten Nachteile und unter besonderer Berücksichtigung des Kosten-/Nutzenverhältnisses mit minimalem Herstellungsaufwand eine störunanfällige und insbesondere betriebssichere Kollisionsschutzeinrichtung für fahrerlose Flurförderzeuge zu schaffen, die sich sowohl für automatische als auch für manuelle Betriebsweise von Flurförderzeugen eignet und einfach umstellen läßt.

Erfindungsgemäß wird diese Aufgabe dadurch gelöst, daß jeder Schaltbügel am Flurförderzeug mittels zumindest eines Scherenhebelgetriebes befestigt ist, dessen dem Flurförderzeug zugewandten Scherenenden in Fahrzeugquerrichtung federbelastet vorgespannt sowie verschiebbar geführt sind, und daß der Schaltbügel vermittels zumindest eines fahrzeugstationär spannbaren und/oder aufwickelbaren flexiblen Schaltbandes gegen die Federvorspannung in seine Außerbetriebsstellung verbringbar ist.

Diese Anordnung zeichnet sich trotz hoher Feinfühligkeit durch besondere Einfachheit, geringen Mitteleinsatz und minimalen Wartungsbedarf aus und bietet sich insbesondere für Flurfördersysteme an, deren einfacher Anwendungsbereich keine hohen Gestehungskosten erlaubt.

Bevorzugte Varianten der erfindungsgemäßen Lösung sowie vorteilhafte Weiterbildungen des Erfindungsgedankens ergeben sich aus den Unteransprüchen sowie der nachfolgenden Beschreibung anhand des in den Figuren exemplarisch aufgezeigten Ausführungsbeispieles. Es zeigt:

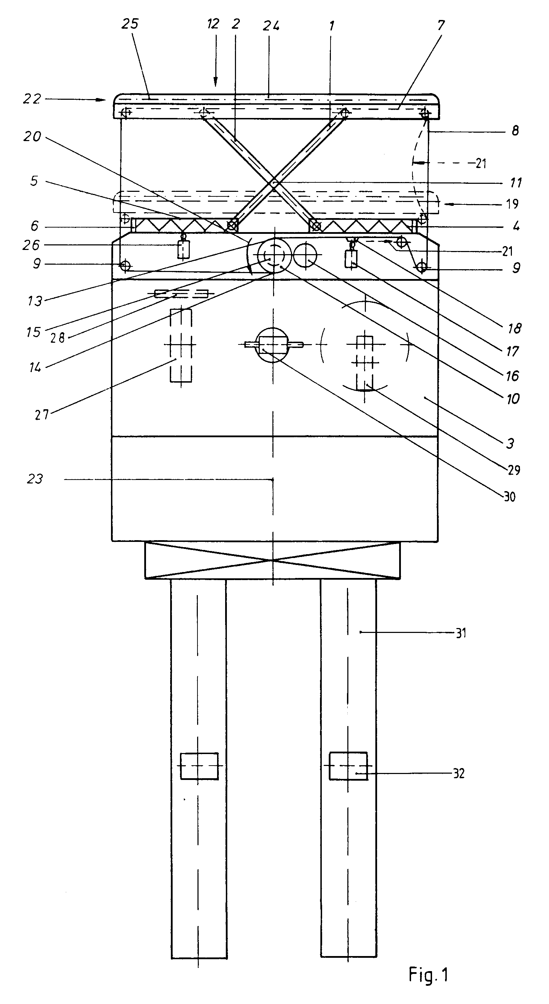

- **Fig. 1**: Die Draufsicht auf eine erfindungsgemäße Kollisionsschutzeinrichtung als Prinzipskizze.

Schematisch dargestellt ist ein Flurförderzeug 3 mit einem lenkbaren Antriebsrad 27, im Automatikbetrieb in bekannter Weise über eine Lenkspule 28 gesteuert, sowie mit einem schwenkbaren Laufrad 29 und einer für manuellen Handbetrieb mittig angeordneten Deichsel 30. Das Flurförderzeug 3 ist weiterhin mit einem ggf. höhenveränderbaren, gabelförmigen Lastträger 31 ausgestattet, der sich auf zwei Lastrollen 32 abstützt.

An dem dem Lastträger 31 entgegengesetzten Ende des Flurförderzeuges 3 ist mittels zumindest eines Scherenhebelgetriebes 1, 2 eine Kollisionsschutzeinrichtung 12 angeordnet. Dabei sind die Enden zweier Scherenhebel 1 und 2 im Flurförderzeug 3 guerbeweglich zu dessen Längsachse 23 um ein Gelenk 11 gegen die Kraft von Federmitteln 4 geradlinig geführt. Als Führungselemente 5 kommen dabei vorzugsweise fahrzeugfixierte Rohre, Nuten oder Wellen zum Einsatz, in bzw. auf denen die Scherenhebel 1 und 2 auf Hülsen, Buchsen oder Gleitsteinen horizontal gegen Anschläge 6 verschiebbar sind. Als Federmittel 4 bieten sich aus Kostengründen einfache Druckfedern an; jedoch sind auch hydraulische oder pneumatische Federmittel 4, beispielsweise öl-, Gasdruckfedern o.ä., denkbar.

Die beiden vorderen Enden der Scherenhebel 1 und 2 dienen als Träger für einen Schaltbügel 7 bekannter Bauart und sind in diesem querverschiebbar gelagert. Der Schaltbügel 7 ist frontseitig mit einem bekannten und deshalb nicht näher dargestellten und beschriebenen elastischen Personenschutz-Element 24 leicht kompressiblen Materials bestückt, in das zumindest ein Kollisionsfühler 25 - vorzugsweise durchgehend über die gesamte Fahrzeugbreite - eingebettet ist.

Der Schaltbügel 7 ist über zumindest ein flexibles Schaltband 8 einziehbar, das mit dem Flurförderzeug 3 wirkverbunden ist und unendlich oder endlich ausgebildet sein kann. Im Ausführungsbeispiel kommt ein einteiliges Schaltband 8 endlicher Länge zum Einsatz, das über mehrere, im Personenschutz-Element 24 und auf dem Flurförderzeug 3 angeordnete Umlenkrollen 9 geführt ist, dergestalt, daß der Zwischenraum zwischen dem ausgefahrenen Schaltbügel 7 und dem Flurförderzeug 3 seitlich geschlossen ist und solchermaßen einen Seitenschutz bildet.

Auf dem Flurförderzeug 3, vorzugsweise mittig desselben, ist zumindest eine Bandspann- und/oder -wickeleinrichtung 10 angeordnet, die als eine Art Bandroller für das Schaltband 8 fungiert. Die Bandspann- und/oder -wickeleinrichtung 10 weist zwei am Umfang diametral gegenüberliegende Bandeingänge 13 und 14 auf und ist mit einer nur schematisch angedeuteten Kernspule 15 ausgestattet, an der beide Enden des Schaltbandes 8 befestigt und gemeinsam übereinander aufspulbar sind. Bei einer alternativen Anordnung sind zwei Kernspulen 15 vertikal übereinandergeordnet, wobei dann jeder Bandeingang 13 und 14 zu einer der übereinanderliegenden Kernspulen 15 führt, was aufgrund des gemeinsamen Antriebes 16 gleichen Drehsinn der Kernspulen 15 voraussetzt.

Um die notwendige Spannung des Schaltbandes 8 stets aufrecht zu erhalten, ist es empfehlenswert, die Kernspule 15 zu verfedern, vorzugsweise in Wickelrichtung, so daß das Abspulen des Schaltbandes 8 gegen geringe Federvorspannkraft erfolgen muß, was eine genaue Abstimmung der Federkraft der nicht dargestellten Wickelfeder gegenüber der Federkraft der Federmittel 4 erfordert. Hierbei sollte die Federkraft der Federmittel 4 wesentlich größer sein als die einer eventuellen Wickelfeder. Die Bandspann- und/oder -wickeleinrichtung 10 kann zusätzlich mit einer automatisch wirkenden Bandbremse ausgestattet sein.

Mit der Bandspann- und/oder -wickeleinrichtung 10 koppel- bzw. entkoppelbar ist ein Antrieb 16, der vorzugsweise als Stellmotor ausgebildet ist. Dabei empfiehlt es sich, den Antrieb 16 mittels eines Kupplungselementes, beispielsweise einer Rutschkupplung, direkt vertikal auf der Kernspule 15 der Bandspann- und/oder -wickeleinrichtung 10 anzuflanschen. Stattdessen kann die Bandspann- und/oder -wickeleinrichtung 10 auch mit einem verzahnten Getriebeelement ausgestattet sein, in dem ein Stellritzel des Antriebes 16 kämmt; wirkungsäquivalente Reibradantriebe o.ä. sind denkbar. Da derartige Antriebs- bzw. Getriebeelemente dem Fachmann hinreichend bekannt sind, wird auf deren Darstellung und nähere Beschreibung verzichtet.

Gemäß einer nicht näher dargestellten und beschriebenen Ausführungsform sind anstelle eines einzelnen Schaltbandes 8 zwei separate Schaltbänder 8 mit jeweils eigenen Bandspann- und/oder -wickeleinrichtungen 10 beidendig des Schaltbügels 7 befestigt. Diese Anordnung erfordert ein synchrones Aufspulen der Schaltbänder 8, damit die Kollisionsschutzeinrichtung 12 mit dem Schaltbügel 7 parallel zur endseitigen Fahrzeugkontur einziehbar ist. Aus diesem Grunde empfiehlt es sich, die Kernspulen 15 beider Bandspann- und/oder -wickeleinrichtungen 10 gemeinsam anzutreiben, was sich zudem kostenminimierend auswirkt. Hierzu wird der Antrieb 16 mittig zwischen jeweils einer rechts- und linksseitig mit Abstand zueinander auf dem Flurförderzeug 3 angeordneten Bandspann- und/oder -wickeleinrichtung 10 plaziert und ein mittels Friktion oder Formeingriff arbeitendes Element desselben gleichzeitig mit den Antriebs- bzw. Getriebeelementen der Kernspulen 15 wirkgekoppelt. Voraussetzung hierfür ist ein jeweils entgegengesetzter Drehsinn der beiden Bandspann- und/oder -wickeleinrichtungen 10.

Dem Schaltband 8 gegenüberstehend sind am Flurförderzeug 3 signalauslösende Bandverschiebungssensoren 17 vorgesehen, die Bewegungen des Schaltbandes 8 detektieren. Die Bandverschiebungssensoren 17 können kontaktierender oder kontaktloser Bauart sein und nach verschiedenen physikalischen Prinzipien arbeiten, beispielsweise auf mechanischer, (elektro-)magnetischer, optischer oder optoelektronischer Basis. Exemplarisch hierzu seien End- oder Magnetschalter, Reflexlichtschranken o.ä. genannt. Diese stehen mit Oberflächen- bzw. Signalmarkierungen 18 des Schaltbandes 8 in Wirkverbindung, die als Bandnocken, Magnetcodierungen, Farbfelder o.ä., ausgebildet sein können und die Betriebsstellung 22 und/oder Außerbetriebsstellung 19 des Schaltbügels 7 festlegen. Zusätzlich - d.h. redundant - können direkt am Scherenhebelgetriebe 1, 2 oder im Verschiebebereich deren beiden Scherenhebel 1 und 2 an den Führungselementen 5 weitere signalauslösende Mittel 26, vorzugsweise Endschalter, angeordnet sein.

Die Wirkungsweise der erfindungsgemäßen Kollisionsschutzeinrichtung 12 ist nachfolgend näher erläutert.

Bei einer Frontalkollision mit einem Hindernis - gleich welcher Art - wird der Schaltbügel 7 entweder parallel zur endseitigen Fahrzeugkontur oder schräg versetzt zu derselben nach innen gedrückt. Dadurch werden die beiden Scherenhebel 1 und 2 um das Gelenk 11 bewegt und entgegen der Kraft der Federmittel 4 in bzw. auf den Führungselementen 5 in Querrichtung zur Fahrzeuglängsachse 23 geradgeführt nach außen verschoben. Über eine Kontaktierung des Kollisionsfühlers 25 und/oder eines der signalauslösenden Mittel 26 wird in bekannter Weise eine Verzögerung und/oder Notabschaltung des Flurförderzeuges 3 ausgelöst, indem der Fahrantrieb abgeschaltet und/oder das Flurförderzeug 3 zusätzlich abgebremst wird.

Sobald ein Hindernis, beispielsweise eine laufende Person, seitlich auf die Kollisionsschutzeinrichtung 12 auftrifft, wird das den seitlichen Zwischenraum überbrückende Schaltband 8 quer zur Fahrzeuglängsrichtung nach innen ausgelenkt. Durch eine sich auf der Kernspule 15 befindliche Bandreserve wird eine Verschiebung des Schaltbandes 8 in Richtung des gestrichelt dargestellten Bewegungspfeiles 21 ermöglicht, wobei die dem Bandverschiebungssensor 17 gegenüberliegende Oberflächen- bzw. Signalmarkierung 18 für die Betriebsstellung 22 des Schaltbügels 7 aus dem Kontaktbereich des Bandverschiebungssensors 17 wandert und dieser dann ein Verzögerungs- und/oder Notabschaltungssignal auslöst.

Solange sich das Flurförderzeug 3 in automatischer Betriebsweise fahrerlos entlang vorgegebener Fahrspuren bewegt, beispielsweise induktiv, optisch oder optoelektronisch gesteuert, bleibt die Kollisionsschutzeinrichtung 12 aktiviert und befindet sich in ihrer Betriebsstellung 22. Diese liegt in der Regel soweit vor der äußeren Fahrzeugkontur, daß der Nachlauf des Schaltbügels 7 größer ist als der Verzögerungsweg bis zum Fahrzeugstillstand bei Notabschaltung.

An bestimmten Haltestationen der vorgegebenen Fahrspur kann nun die Notwendigkeit bestehen, das Flurförderzeug 3 von der Fahrspur zu entnehmen und - beispielsweise zum Be- und Entladen in Lägern oder engen Regalgängen - mittels der Deichsel 30 manuell fahrergesteuert weiterzuführen. Während bei Automatikbetrieb Sicherheitsbestimmungen und Unfallverhütungsvorschriften die Anordnung von Kollisionsschutzeinrichtungen 12 zwingend vorschreiben, sind diese bei manueller Fahrzeugsteuerung nicht mehr erforderlich, unter engen Raumverhältnissen sogar im Wege.

Aus diesem Grunde muß die Kollisionsschutzeinrichtung 12 in eine nahe oder unterhalb der Fahrzeugkontur liegende Außerbetriebsstellung 19 gebracht werden. Zum Einziehen des Schaltbügels 7 erfordert eine Aktivierung der Bandspann- und/oder - wickeleinrichtung 10 mittels des Antriebes 16. Der Steuerbefehl hierzu läßt sich auf unterschiedliche Weise erzeugen:
1. durch manuelle Steuerbefehlsgebung des jeweiligen Fahrzeugführers direkt auf dem Flurförderzeug 3;
2. durch automatische Programmsteuerung anhand eines fahrzeuginternen Rechners, dem Fahrkurs und Haltestellen vorgegeben sind, oder
3. durch stationsseitige Datenübertragung und Signalauslösung.

Aufgrund eines derart ausgelösten Steuersignals wird der Antrieb 16 mit der Bandspann- und/oder -wickeleinrichtung 10 wirkverbunden und in Betrieb gesetzt. Das Schaltband 8 wird nun in Drehrichtung 20 des Bewegungspfeiles 21 solange auf die Kernspule 15 aufgewickelt, bis sich der Schaltbügel 7 in seiner Außerbetriebsstellung 19 befindet. Danach wird der Antrieb 16 automatisch wieder abgeschaltet, beispielsweise durch Erkennung unbezifferter Oberflächen- bzw. Signalmarkierungen, durch Signalauslösung einer Rutschkupplung, sobald der Schaltbügel 7 an die Fahrzeugkontur anschlägt, über Endschalter, Drehgeber o.ä. Das Flurförderzeug 3 ist nun für manuellen Fahrbetrieb bereit.

Nach Beendigung des manuellen Betriebsweise muß das Flurförderzeug 3 unter gleichzeitiger Reaktivierung seiner Kollisionsschutzeinrichtung 12 wieder in die vorgegebene Fahrspur eingefädelt werden. Aufgrund erneuter Steuerbefehlsgebung entsprechend einer der zuvor beschriebenen Möglichkeiten wird der Antrieb 16 von der Bandspann- und/oder -wickeleinrichtung 10 entkoppelt und diese wieder freigegeben. Das Schaltband 8 wird dadurch der Vorspannkraft der Federmittel 4 ausgesetzt, die die beiden Scherenhebel 1 und 2 in bzw. auf ihren Führungselementen 5 um das Gelenk 11 wieder nach innen drücken. Dadurch öffnet sich die Schere des Scherenhebelgetriebes 1, 2 und der Schaltbügel 7 wird unter gleichzeitiger Abwicklung des Schaltbandes 8 auf der Kernspule 15 entgegen der Vorspannkraft ihrer Wickelfeder wieder in seine Außerbetriebsstellung 19 gedrückt. Damit das Schaltband 8 - insbesondere in den seitlichen Zwischenräumen - nicht erschlafft, muß stets eine verbleibende Restspannung gewährleistet sein. Dies läßt sich beispielsweise durch den Einsatz einer Wickelfeder mit leicht progressiver Federkennlinie erreichen, die kurz vor Erreichen der Außerbetriebsstellung 19 den Widerstand beim Abwickeln des Schaltbandes 8 geringfügig erhöht.

Die Erfindung ist natürlich keinesfalls auf die in den Figuren dargestellte und beschriebene Ausführungsform(en) beschränkt, sondern erstreckt sich auch auf zahlreiche alternative Ausgestaltungsvarianten. Es versteht sich von selbst, daß eine Vielzahl konstruktiver und kinematischer Abwandlungen sowie der Austausch wirkungsäquivalenter Antriebs-, Getriebe-, Feder-, Signal- und Steuermittel im Rahmen der Erfindung liegt. Der Erfindungsgedanke läßt gleichfalls den Austausch des Schaltbandes 8 gegen ein Schalt- bzw. Zugseil sowie der Bandspann- und/oder -wickeleinrichtung 10 gegen eine motorisch antreibbare Seilrolle zu, ebenso wie es denkbar ist, hydraulische oder pneumatische Antriebsmittel für den Bandeinzug einzusetzen.

### Teileliste

- 1.: Scherenhebel
- 2.: Scherenhebel
- 3.: Flurförderzeug
- 4.: Federmittel
- 5.: Führungselement
- 6.: Anschlag
- 7.: Schaltbügel
- 8.: Schaltband
- 9.: Umlenkrolle
- 10.: Bandspann- und/oder -wickeleinrichtung
- 11.: Gelenk
- 12.: Kollisionsschutzeinrichtung
- 13.: Eingang
- 14.: Eingang
- 15.: Kernspule
- 16.: Antrieb
- 17.: Bandverschiebungssensor
- 18.: Oberflächen- bzw. Signalmarkierung
- 19.: Außerbetriebsstellung
- 20.: Drehrichtung
- 21.: Bewegungspfeil
- 22.: Betriebsstellung
- 23.: Fahrzeuglängsachse
- 24.: Personenschutz-Element
- 25.: Kollisionsfühler
- 26.: signalauslösendes Mittel
- 27.: Antriebsrad
- 28.: Lenkspule
- 29.: Laufrad
- 30.: Deichsel
- 31.: Lastträger
- 32.: Lastrolle

## Patentansprüche

1. Kollisionsschutzeinrichtung für fahrerlose Flurförderzeuge mit front- und/oder endseitig des Flurförderzeuges gelenkig angeordneten Schaltbügeln zur Verzögerung und/oder Notabschaltung des Flurförderzeuges, die von einer äußeren Betriebsstellung in eine an oder zumindest teilweise unterhalb der äußeren Fahrzeugkontur liegende Außerbetriebsstellung verbringbar sind,
**dadurch gekennzeichnet**,
daß jeder Schaltbügel (7) am Flurförderzeug (3) mittels zumindest eines Scherenhebelgetriebes (1, 2) befestigt ist, dessen dem Flurförderzeug (3) zugewandten Scherenenden in Fahrzeugquerrichtung federbelastet vorgespannt sowie verschiebbar geführt sind, und daß der Schaltbügel (7) vermittels zumindest eines fahrzeugstationär spannbaren und/oder aufwickelbaren flexiblen Schaltbandes (8) gegen die Federvorspannung in seine Außerbetriebsstellung (19) verbringbar ist.

2. Kollisionsschutzeinrichtung nach Anspruch 1,
**dadurch gekennzeichnet**,
daß das zumindest eine Schaltband (8) in zumindest einer auf dem Flurförderzeug (3) angeordneten Bandspann- und/oder -wickeleinrichtung (10) geführt ist.

3. Kollisionsschutzeinrichtung nach Anspruch 1 und/oder 2,
**dadurch gekennzeichnet**,
daß die Bandspann- und/oder -wickeleinrichtung (10) zumindest in einer Drehrichtung antreibbar ist.

4. Kollisionsschutzeinrichtung nach einem oder mehreren der vorangehenden Ansprüche,
**dadurch gekennzeichnet**,
daß ein mit der Bandspann- und/oder -wickeleinrichtung (10) koppel- und entkoppelbarer Antrieb (16) vorgesehen ist.

5. Kollisionsschutzeinrichtung nach einem oder mehreren der vorangehenden Ansprüche,
**dadurch gekennzeichnet**,
daß der Antrieb (16) manuell und/oder automatisch steuerbar ist.

6. Kollisionsschutzeinrichtung nach einem oder mehreren der vorangehenden Ansprüche,
**dadurch gekennzeichnet**,
daß der Antrieb (16) stations- und/oder fahrzeugseitig steuerbar ist.

7. Kollisionsschutzeinrichtung nach einem oder mehreren der vorangehenden Ansprüche,
**dadurch gekennzeichnet**,
daß die Bandspann- und/oder -wickeleinrichtung (10) mit zwei am Umfang diametral angeordneten Bandeingängen (13, 14) ausgestattet ist.

8. Kollisionsschutzeinrichtung nach einem oder mehreren der vorangehenden Ansprüche,
**dadurch gekennzeichnet**,
daß die Bandspann- und/oder -wickeleinrichtung (10) eine Kernspule (15) aufweist, auf die die Bandabschnitte beider Bandeingänge (13, 14) gemeinsam übereinander aufspulbar sind.

9. Kollisionsschutzeinrichtung nach einem oder mehreren der vorangehenden Ansprüche,
**dadurch gekennzeichnet**,
daß die Bandspann- und/oder -wickeleinrichtung (10) zwei vertikal übereinanderliegende Kernspulen (15) aufweist, wobei auf jede Kernspule (15) jeweils der Bandabschnitt eines Bandeinganges (13, 14) aufspulbar ist.

10. Kollisionsschutzeinrichtung nach einem oder mehreren der vorangehenden Ansprüche,
**dadurch gekennzeichnet**,
daß die zumindest eine Kernspule (15) federbelastet vorgespannt ist.

11. Kollisionsschutzeinrichtung nach einem oder mehreren der vorangehenden Ansprüche,
**dadurch gekennzeichnet**,
daß das Schaltband (8) beidseitig des Flurförderzeuges (3) über Umlenkrollen (9) geführt ist.

12. Kollisionsschutzeinrichtung nach einem oder mehreren der vorangehenden Ansprüche,
**dadurch gekennzeichnet**,
daß zumindest ein auf dem Flurförderzeug (3) angeordneter signalauslösender Bandverschiebungssensor (17) vorgesehen ist, der mit Oberflächen- bzw. Signalmarkierungen (18) des Schaltbandes in Wirkverbindung steht.

13. Kollisionsschutzeinrichtung nach einem oder mehreren der vorangehenden Ansprüche,
**dadurch gekennzeichnet**,
daß das Schaltband (8) unendlich ausgebildet ist.

14. Kollisionsschutzeinrichtung nach einem oder mehreren der vorangehenden Ansprüche,
**dadurch gekennzeichnet**,
daß der Schaltbügel (7) beidendig mit einem jeweils separat antreibbaren Schaltband (8) versehen ist.

15. Kollisionsschutzeinrichtung nach einem oder mehreren der vorangehenden Ansprüche,
**dadurch gekennzeichnet**,
daß die Betriebsstellung (22) des Schaltbügels (7) ausschließlich für automatische und die Außerbetriebsstellung (19) ausschließlich für manuelle Betriebsweise des Flurförderzeuges (3) vorgesehen ist.

16. Kollisionsschutzeinrichtung nach einem oder mehreren der vorangehenden Ansprüche,
**dadurch gekennzeichnet**,
daß der Schaltbügel (7) bei Entnahme von einer vorgegebenen Fahrspur, vorzugsweise an Haltestellen, in seine Außerbetriebsstellung (19) und bei Wiederaufsetzen auf die Fahrspur wieder in seine Betriebsstellung (22) automatisch gesteuert verbringbar ist.
